Europäisches Patentamt

**European Patent Office**

Office européen des brevets

(11) Veröffentlichungsnummer : **0 103 894 B1**

(12) **EUROPÄISCHE PATENTSCHRIFT**

(45) Veröffentlichungstag der Patentschrift :
**22.01.86**

(21) Anmeldenummer : **83109396.8**

(22) Anmeldetag : **21.09.83**

(51) Int. Cl.⁴ : **B 01 J 2/16**, B 01 J 8/38,
B 01 F 13/02, A 23 G 3/20,
A 23 P 1/00, A 61 J 3/00

(54) **Fliessbettapparatur.**

(30) Priorität : **21.09.82 DE 3234911**

(43) Veröffentlichungstag der Anmeldung :
**28.03.84 Patentblatt 84/13**

(45) Bekanntmachung des Hinweises auf die Patenterteilung : **22.01.86 Patentblatt 86/04**

(84) Benannte Vertragsstaaten :
**AT CH DE FR GB IT LI**

(56) Entgegenhaltungen :
**CH-A- 264 592**
**DE-A- 1 577 729**
**DE-A- 1 632 404**
**DE-C- 872 928**
**GB-A- 2 043 219**
**US-A- 4 050 406**

(73) Patentinhaber : **Hüttlin, Herbert**
**Lörracher Strasse 14**
**D-7853 Steinen (DE)**

(72) Erfinder : **Hüttlin, Herbert**
**Lörracher Strasse 14**
**D-7853 Steinen (DE)**

(74) Vertreter : **Wuesthoff, Franz, Dr.-Ing. et al**
**Patentanwälte Wuesthoff -v. Pech-**
**mann-Behrens-Goetz Schweigerstrasse 2**
**D-8000 München 90 (DE)**

Jouve, 18, rue St-Denis, 75001 Paris, France

## Beschreibung

Die Erfindung betrifft eine Fließbettapparatur zum Mischen, Trocknen, Granulieren, Pelletieren, Lackieren und/oder Dragieren pulvrigen oder körnigen Gutes mit

— einem Behälter, der in bezug auf eine zumindest annähernd senkrechte Behälterachse zumindest annähernd rotationssymmetrisch ist und ein Unterteil mit nach unten abnehmendem Durchmesser hat,

— einem Tauchrohr, das von oben her axial in den Behälter hineinragt und an eine Quelle für ein Gas anschließbar ist, mit dem sich das Gut im Behälter bewegen, insbesondere fluidisieren läßt,

— einer Schüssel, die unterhalb des Tauchrohrs angeordnet, in Bezug auf die Behälterachse zumindest annähernd rotationssymmetrisch gestaltet ist und das durch das Tauchrohr eintretende Gas nach oben umlenkt,

— und einem Gasauslaß.

Bei einer bekannten Fließbettapparatur dieser Gattung (DE-PS 872 928) weist der Behälter einen senkrechten Hohlzylinder auf, an den sich nach unten ein steiles trichterförmiges Unterteil anschließt. Das Unterteil ist unten durch einen kübelartigen Endabschnitt abgeschlossen. Nach oben hin ist der Behälter durch einen Deckel abgeschlossen, der ein Gebläse trägt. Das Tauchrohr ist an dem Deckel aufgehängt, an das Gebläse angeschlossen, erstreckt sich axial durch den zylindrischen und den trichterförmigen Teil des Behälters hindurch und endet in dem kübelartigen Endabschnitt. Die Schüssel ist in dem kübelartigen Endabschnitt aufgehängt, ohne dessen Wand zu berühren. Oberhalb des unteren Endes des Tauchrohrs, jedoch noch innerhalb des kübelartigen Endabschnitts, beginnt ein Mantelrohr, das sich gleichachsig mit dem Tauchrohr, dieses mit radialem Abstand umschließend, nach oben erstreckt und unterhalb eines Abweisschirms endet, der unterhalb des Deckels am Tauchrohr befestigt ist.

In dieser bekannten Fließbettapparatur soll das Gebläse Luft derart umwälzen, daß sie durch das Tauchrohr nach unten strömt, in der Schüssel nach oben umgelenkt wird, durch das Mantelrohr zurück nach oben strömt, dann vom Abweisschirm radial nach außen umgelenkt wird und außen um diesen herum wieder zum Gebläse gelangt. Das im Behälter enthaltene Schüttgut soll innerhalb des trichterförmigen Unterteils nach unten in Richtung auf die Schüssel rutschen, von dem in der Schüssel nach oben umgelenkten Luftstrom mitgerissen und durch das Mantelrohr nach oben getragen werden, wo es vom Abweisschirm nach außen umgelenkt und auf der Oberfläche des Schüttgutes abgelagert wird, um dann wieder nach unten zu rutschen.

Tatsächlich wird aber bei der bekannten Fließbettapparatur selbst mäßig schweres Schüttgut, wenn überhaupt, nur im Bereich der Schüssel fluidisiert und innerhalb des kübelartigen Endabschnitts umgewälzt, wobei höchstens geringe Mengen des Schüttgutes durch das Mantelrohr nach oben gelangen. Der größte Teil des Schüttgutes bleibt deshalb im zylindrischen Oberteil des Behälters und auch in dessen trichterförmigem Unterteil so gut wie bewegungslos liegen, so daß die angestrebte Umschichtung, Auflockerung und gegebenenfalls weitere Behandlung des Schüttgutes nicht oder jedenfalls nicht in der wünschenswerten Intensität stattfinden kann. Daran kann auch die Tatsache nichts ändern, daß der Behälter, um das Nachrutschen des Gutes zu begünstigen, schlank gestaltet ist und eine entsprechend große Bauhöhe aufweist, die erheblich größer als der größte Behälterdurchmesser ist. Diese große Bauhöhe vergrößert bei entsprechend großer Füllhöhe sogar noch die Gefahr, daß das Gut den Einlaß des Mantelrohrs verstopft und infolgedessen eine Fluidisierung nicht einmal im kübelartigen Endabschnitt stattfindet.

Der Erfindung liegt deshalb die Aufgabe zugrunde, eine Fließbettapparatur der eingangs beschriebenen Gattung derart weiterzubilden, daß sie das zu behandelnde pulvrige oder körnige Gut zuverlässig und gründlich umwälzt und bei gegebenem, der angestrebten Durchsatzleistung angepaßtem Volumen ihres Behälters eine geringere Bauhöhe erfordert.

Diese Aufgabe ist erfindungsgemäß dadurch gelöst,

— daß das Unterteil des Behälters in eine im wesentlichen zylindrische Wand der Schüssel einmündet,

— und das Tauchrohr in die Schüssel derart eintaucht, daß zwischen Tauchrohr und zylindrischer Wand der Schüssel ein enger Ringraum gebildet ist.

Der durch das Tauchrohr zentral zugeführte, nach unten gerichtete Gasstrom wird durch die zylindrische Wand der Schüssel in dem verhältnismäßig engen Ringraum in eine nach oben gerichtete Strömung von ringförmigem Querschnitt verwandelt, die eine gleichmäßige Umwälzung des im Behälter enthaltenen Gutes bewirkt. Diese Umwälzung nimmt bei ausreichender Strömungsgeschwindigkeit des Gases die Form einer vollständigen Fluidisierung des Gutes an; das Gut wird vom Gasstrom im Bereich rings um das zentrale Tauchrohr nach oben mitgerissen, strömt radial nach außen und gelangt längs der nach unten konvergierenden Behälterwand wieder in die Nähe der Schüssel, um von dort aus erneut nach oben mitgerissen zu werden.

Ein Mantelrohr, das zum Verstopfen neigen könnte, ist deshalb nicht nötig. Das Gut wird in dem engen Ringraum gründlich fluidisiert und mit Sicherheit nach oben mitgerissen. Die Bauhöhe des Behälters ist schon deshalb gering, weil das Unterteil des Behälters unmittelbar in die zylindrische Wand der Schüssel mündet. Wegen der erfindungsgemäß erreichbaren Fluidisierung des gesamten Behälterinhalts oder zumindest großer Teile davon braucht das Unterteil des Behälters nur verhältnismäßig schwach geneigt zu sein ; auch dies trägt dazu bei, daß die Bauhöhe der gesamten Apparatur gering gehalten werden kann.

Es ist zweckmäßig, wenn der Ringraum radial nach innen durch einen unteren Randwulst des Tauchrohrs begrenzt ist. Dadurch wird die Umlenkung des Gasstromes innerhalb der Schüssel begünstigt ; durch die Gestaltung des Randwulstes läßt sich bei gegebenem Gasdurchsatz je Zeiteinheit die Strömungsgeschwindigkeit im Bereich des oberen Randes der Schüssel so einstellen, daß sie zum Fluidisieren des Gutes ausreicht.

Der Randwulst kann von einem rings um das Tauchrohr angeordneten, aufblähbaren Schlauch gebildet sein. Diese Ausbildung hat den Vorteil, daß die Strömungsverhältnisse innerhalb der Schüssel während des Betriebes durch mehr oder weniger starkes Aufblähen des Schlauches verändert werden können. Zweckmäßigerweise läßt sich der Schlauch so stark aufblähen, daß er sich an die Schüssel anlegt und dadurch das Gut bei einer Betriebsunterbrechung daran hindert, in die Schüssel zu fließen.

Die von der Eintauchstiefe des Tauchrohrs in die Schüssel bestimmte Höhe des Ringraumes ist ungefähr so groß oder größer als der Innendurchmesser des Tauchrohrs in dessen unterem Endabschnitt. Dadurch ist eine ausreichende Führung des nach oben strömenden Gases auch unter schwierigen Bedingungen gewährleistet.

Der engste Querschnitt des Ringraumes ist vorzugsweise ungefähr so groß oder kleiner als der Innenquerschnitt des Tauchrohrs in dessen unterem Endabschnitt.

Übereinstimmend mit der bekannten gattungsgemäßen Apparatur kann in einem Abstand oberhalb der Schüssel rings um das Tauchrohr ein zumindest annähernd rotationssymmetrischer Abweisschirm angeordnet sein, der vom Gas nach oben mitgenommenes Gut nach außen umlenkt. Erfindungsgemäß ist der Abweisschirm vorzugsweise siebartig gestaltet, damit das zur Fluidisierung des Gutes verwendete Gas, das im Bereich des Abweisschirms seine Strömungsenergie weitgehend verloren hat, im wesentlichen unbehindert durch den Abweisschirm hindurch nach oben abströmen kann. Das Gas braucht den Abweisschirm somit nicht oder nur teilweise zu umgehen ; dadurch wird vermieden, daß das Gas in einer radial außerhalb des Abweisschirms liegenden Ringzone mit allzugroßer Geschwindigkeit aus dem Behälter abströmt. Bei siebartiger Gestaltung kann der Abweisschirm den Raum zwischen dem Tauchrohr und einem oberen Rand des Behälters vollständig überspannen. In diesem Fall ist der Raum innerhalb des Behälters, den das Gut einnehmen kann, auch nach oben hin vollständig abgegrenzt.

Unabhängig von, vorzugsweise jedoch zusätzlich zu der beschriebenen Ausbildung eines Randwulstes am unteren Ende des Tauchrohrs kann die Umlenkung des Gases um vorzugsweise 180° durch die Gestaltung der Schüssel begünstigt werden. Vorzugsweise hat die Schüssel, wie bei der bekannten Apparatur, einen nach oben vorspringenden mittleren Bodenbereich, der die Strömungsverluste beim Aufprall des Gases auf die Schüssel vermindert. Erfindungsgemäß kann der mittlere Bodenbereich der Schüssel einen höhenverstellbaren Verschluß einer Entleerungsöffnung bilden.

Anstelle einer solchen Entleerungsöffnung kann die Schüssel unterhalb ihrer zylindrischen Wand einen tangential wegragenden Entleerungsstutzen aufweisen.

Die Schüssel kann an ihrer zylindrischen Wand nach innen ragende leitschaufelartige Vorsprünge aufweisen, zwischen denen das Tauchrohr zentriert und der Gasstrom geführt ist. Die Vorsprünge können so ausgebildet sein, daß sie dem Gasstrom einen Drall erteilen. Dadurch kann die Durchwirbelung des im Behälter enthaltenen Gutes zusätzlich begünstigt werden.

Die erfindungsgemäße Fließbettapparatur hat vorzugsweise eine Sprüheinrichtung zum Befeuchten oder beschichten des Gutes oder zum Einleiten von Stoffen, die das Gut erst bilden. Eine solche Sprüheinrichtung weist erfindungsgemäß vorzugsweise mehrere Düsen auf, die dicht oberhalb des engen Ringraumes der Schüssel rings um das Tauchrohr angeordnet sind. Solche Düsen sind vorzugsweise am ringförmigen Unterteil des Behälters angeordnet, können aber auch am Randwulst des Tauchrohrs angeordnet sein.

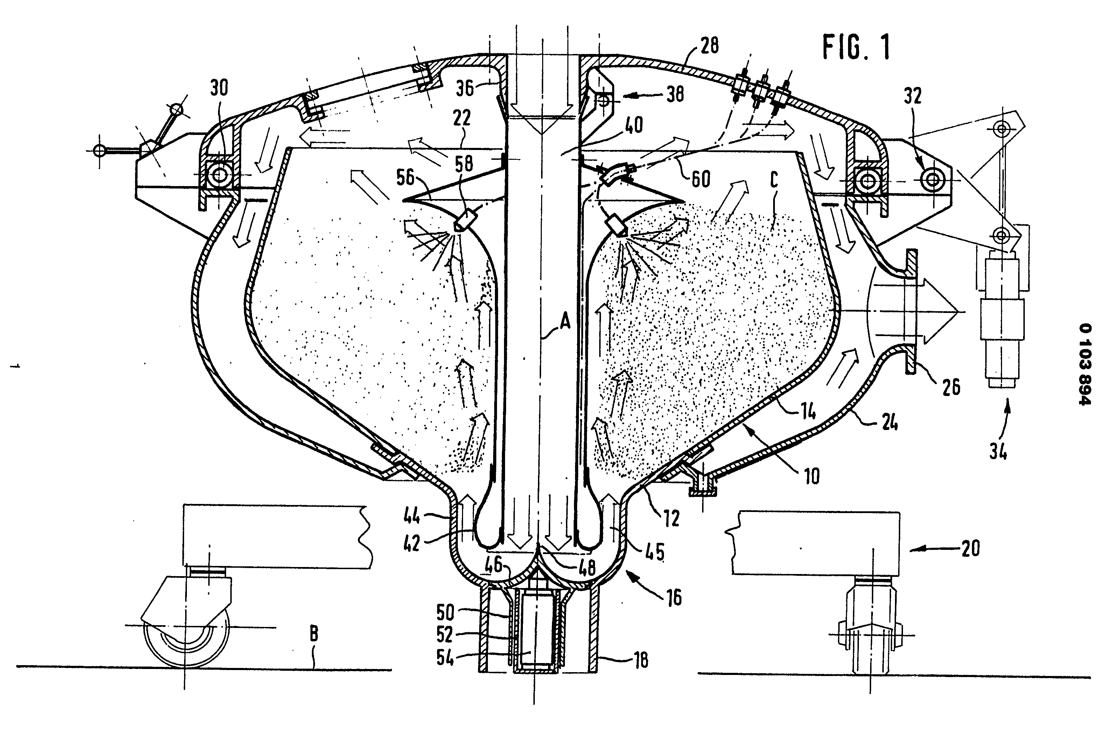

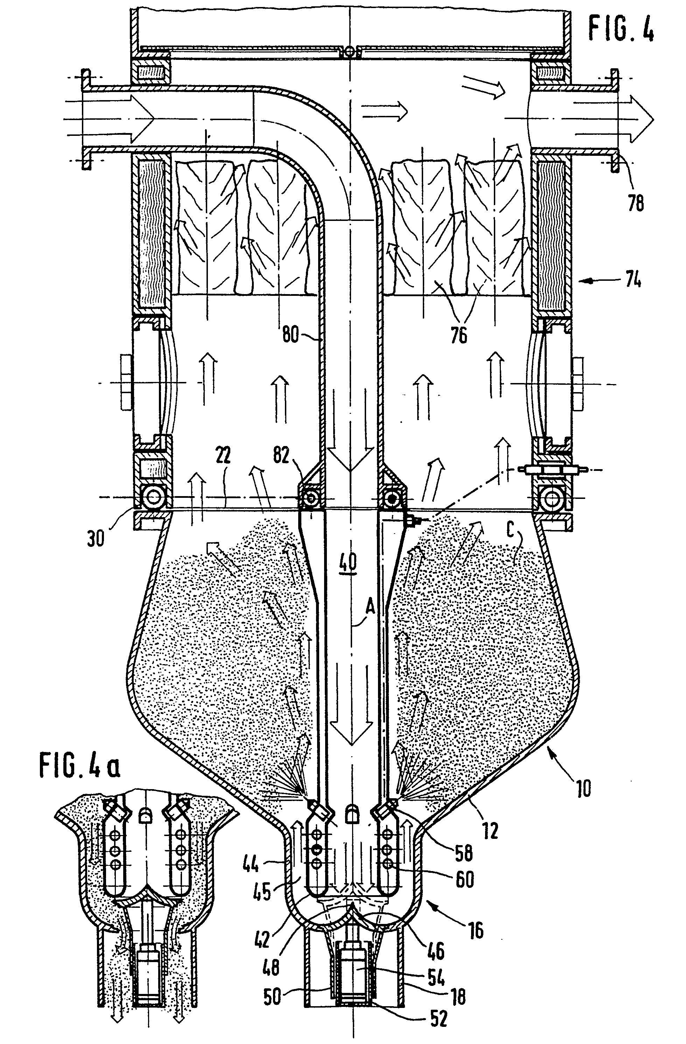

Ausführungsbeispiele der Erfindung werden im folgenden anhand schematischer Zeichnungen mit weiteren Einzelheiten beschrieben. Fig. 1 bis 5 zeigen in je einem axialen Schnitt fünf verschiedene Ausführungsformen der erfindungsgemäßen Fließbettapparatur, wobei Fig. 4a eine Einzelheit aus Fig. 4 in einer Entleerungsstellung darstellt.

Die in Fig. 1 dargestellte Apparatur hat einen Behälter 10, der in bezug auf eine senkrechte Behälterachse A rotationssymmetrisch gestaltet und aus einem ringförmigen Unterteil 12 sowie einem Behältereinsatz 14 zusammengesetzt ist. Das Unterteil 12 verjüngt sich kegelstumpfförmig nach unten und mündet ohne Absatz oder Stufe in eine Schüssel 16, die in bezug auf die Behälterachse A ebenfalls rotationssymmetrisch ausgebildet ist und einen ringförmigen Fuß 18 aufweist, mit dem in der abgebildeten Stellung das gesamte Gewicht des Behälters 10 samt zugehörigen Bauteilen und Behälterinhalt an einem Boden B abgestützt ist. Der Behälter 10 läßt sich mit einem Hubwagen 20 von im wesentlichen üblicher Bauart aus der abgebildeten Stellung anheben und transportieren.

Der Behältereinsatz 14 hat einen unteren Teil, der sich vom Unterteil 12 aus mit gleichem Kegelwinkel wie dieser nach oben erweitert und seinen größten Durchmesser auf etwa halber Höhe des Behältereinsatzes 14 erreicht. Von dort aus verjüngt sich der Behältereinsatz 14 geringfügig zu einem waagerechten oberen Gasauslaß 22 hin.

Am Unterteil 12 ist ferner ein Mantel 24 befestigt, der den Behältereinsatz 14 ringförmig umschließt, in einer waagerechten Ebene geringfügig unterhalb des Gasauslasses 22 endet und einen seitlichen Abgasstutzen 26 aufweist. Der Mantel 24 ist nach oben hin durch einen Behälterdeckel 28 abgeschlossen, der sich mit Abstand über den Gasauslaß 22 hinwegwölbt und durch eine schlauchförmige Dichtung 30 gegen den Mantel 24 abgedichtet ist.

Mantel 24 und Behälterdeckel 28 sind durch ein Scharnier 32 mit waagerechter Schwenkachse sowie durch eine im Abstand von dieser angeordnete Kolbenzylindereinheit 34 miteinander derart verbunden, daß der Behälterdeckel nach oben in eine zumindest annähernd senkrechte Stellung schwenkbar ist.

Der Behälterdeckel 28 ist in bezug auf eine Achse, die in der dargestellten Schließstellung mit der Behälterachse A zusammenfällt, im wesentlichen rotationssymmetrisch gestaltet und weist einen zentralen Einlaßstutzen 36 auf. Am Einlaßstutzen 36 ist mit einem Scharnier 38 ein Tauchrohr 40 derart aufgehängt, daß es in der abgebildeten Schließstellung des Behälterdeckels 28 mit dem Einlaßstutzen fluchtet ; dies bedeutet, daß die Achse des Tauchrohrs 40 ebenfalls mit der Behälterachse A zusammenfällt. Wenn der Behälterdeckel 28 nach oben geschwenkt wird, verlagert sich das Tauchrohr 40 im wesentlichen parallel zu sich selbst nach oben hin, wobei es sich dem Scharnier 32 des Behälterdeckels nähert.

Das Tauchrohr 40 weist in seinem unteren Endbereich einen Randwulst 42 auf, der beim Ausführungsbeispiel gemäß. Fig. 1 von einem mit Luft aufblähbaren Schlauch gebildet ist. Der Randwulst 42 begrenzt zusammen mit einer im wesentlichen zylindrischen Wand 44 der Schüssel 16, in di⊃ das Tauchrohr 40 hineintaucht, einen Ringraum 45, der durch Aufblähen des Randwulstes mehr oder weniger stark verengt und sogar vollständig verschlossen werden kann. In jedem Fall nimmt der Durchmesser des Randwulstes 42 innerhalb des von der Wand 44 der Schüssel 16 umschlossenen Bereichs nach oben hin ab ; in der Ebene des oberen Randes der Schüssel ist also der Durchmesser des Randwulstes kleiner als dessen maximaler Durchmesser.

Die Höhe des Ringraumes 45, das ist die Eindringtiefe des Tauchrohrs 40 in den von der zylindrischen Wand 44 gebildeten Teil der Schüssel 16, ist ungefähr so groß wie der Innendurchmesser des Tauchrohrs 40 in dessen unterem Endabschnitt. Bei normalem Betrieb hat der Ringraum 45 in seinem engsten Bereich eine Querschnittsfläche, die höchstens gleich der inneren Querschnittsfläche des Tauchrohrs 40 in dessen un'erem Endabschnitt ist.

Die Schüssel 16 ist in bezug auf die Behälterachse A insgesamt rotationssymmetrisch gestaltet und hat einen mittleren Bodenbereich 46, der als getrenntes Bauteil eingesetzt ist und eine axial nach oben ragende Spitze 48 aufweist. An der Unterseite des mittleren Bodenbereichs 46 ist ein äußeres Führungsrohr 50 ausgebildet, das auf einem am Fuß 18 befestigten inneren Führungsrohr 52 axial verschiebbar geführt ist. Innerhalb des inneren Führungsrohrs 52 ist eine Kolbenzylindereinheit 54 angeordnet, die es ermöglicht, den mittleren Bodenbereich 46 soweit anzuheben, daß dieser den Randwulst 42 zumindest annähernd berührt und eine Entleerungsöffnung in der Mitte der Schüssel 16 freigibt. Dies ist in Fig. 4a für die in Fig. 4 abgebildete Ausführungsform einer Fließbettapparatur dargestellt, die sich im übrigen teilweise von der in Fig. 1 abgebildeten Ausführungsform unterscheidet.

Gemäß Fig. 1 ist am Tauchrohr 40 in geringem Abstand unterhalb der Ebene des Gasauslasses 22 ein pilzförmiger Abweisschirm 56 befestigt, der das Tauchrohr nach unten hin ummantelt und gemeinsam mit diesem den Schlauch trägt, der den Randwulst 42 bildet. Der Abweisschirm 56 ist in der aus Fig. 1 ersichtlichen Ausführungsform ein hohler Blechkörper, der wie die meisten anderen beschriebenen Bauteile der Fließbettapparatur aus nichtrostendem Stahl besteht. Gemäß Fig. 1 sind in den Abweisschirm 56 in gleichmäßigen Winkelabständen gegeneinander versetzt mehrere Düsen 58 eingebaut, die schräg nach außen und unten gerichtet sind und über Leitungen 60 mit Flüssigkeiten zum Befeuchten, Lackieren und/oder Dragieren eines im Behälter 10 enthaltenen Gutes C gespeist werden können.

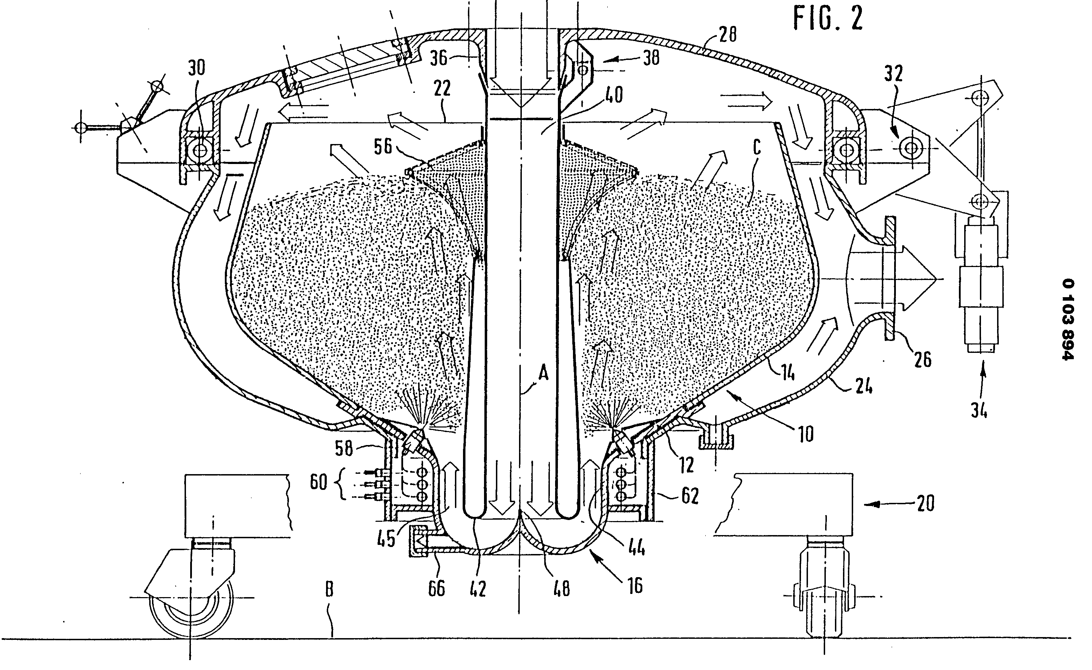

Die in Fig. 2 dargestellte Ausführungsform unterscheidet sich von derjenigen gemäß Fig. 1 im wesentlichen dadurch, daß der Randwulst 42 vom unteren Ende einer im wesentlichen starren Ummantelung des Tauchrohrs 40 gebildet ist, die wie dieses aus nichtrostendem Stahlblech besteht. Der Randwulst 42 und die Ummantelung insgesamt verjüngen sich im wesentlichen gleichmäßig nach oben hin. Der Abweisschirm 56 ist von einem siebartig gelochten Blech, ebenfalls aus nichtrostendem Stahl, gebildet. Die Düsen 58 sind im ringförmigen Unterteil 12 des Behälters 10 angeordnet, schräg nach innen und oben gerichtet und außen von einem Gehäuse 62 umschlossen. Ein weiterer Unterschied gegenüber Fig. 1 besteht darin, daß die Schüssel 16 einstückig ausgebildet ist und unten einen tangential angeordneten Entleerungsstutzen 66 aufweist.

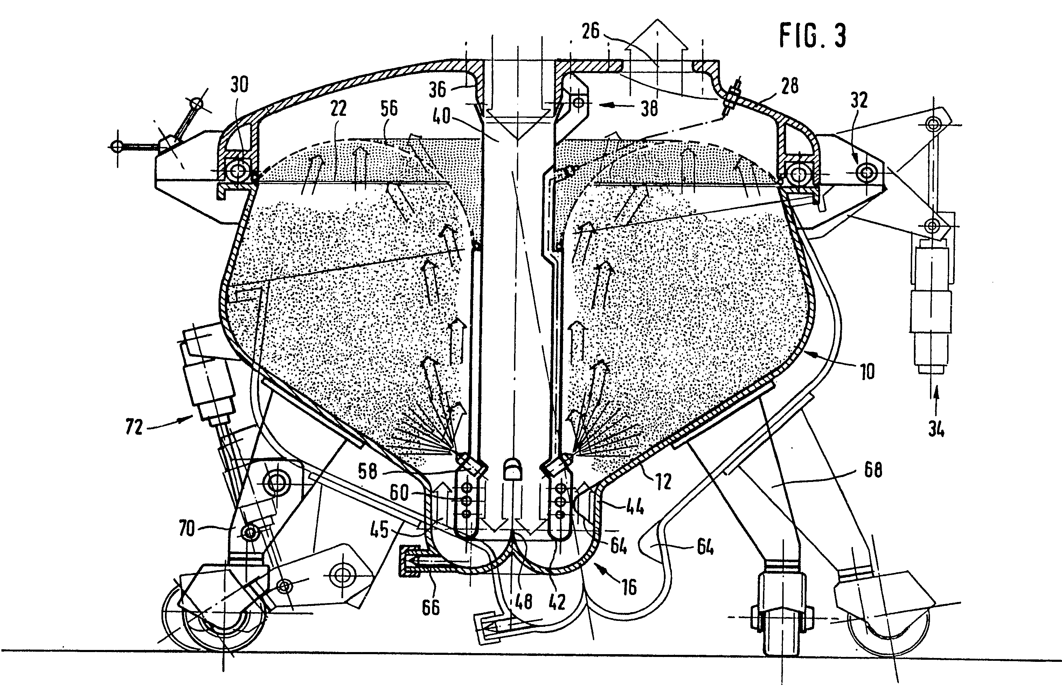

Gemäß Fig. 3 erstreckt sich der Abweisschirm 56, der von einem siebartigen Gewebe gebildet ist, ringförmig über den gesamten Raum zwischen dem Tauchrohr 40 und dem oberen Rand des Behälters 10, der hier einstückig ausgebildet ist. Der Randwulst 42, der wiederum von einer starren Ummantelung des Tauchrohrs 40 gebildet ist, wird in seiner abgebildeten, zur Schüssel 16 gleichachsigen Betriebsstellung von mehreren Vorsprüngen 64 zentriert, die von der im wesentlichen zylindrischen Wand 44 der Schüssel 16 nach innen ragen. Die Vorsprünge 64 bestehen aus Blech und sind in gleichmäßigen Abständen voneinander rings um die Behälterachse A angeordnet, so daß sie als Leitschaufeln wirken. Die Düsen 58 sind in den oberen Bereich des Randwulstes 42 eingebaut und schräg nach außen und oben gerichtet.

Ferner unterscheidet sich die in Fig. 3 dargestellte Ausführungsform von den beiden zuvor beschriebenen darin, daß der Behälter 10 ein eigenes Fahrwerk aufweist. Dieses besteht aus einem Paar starrer Beine 68 und einem Paar gelenkig mit dem Behälter 10 verbundener Beine 70, die mit einer Kolbenzylindereinheit 72 derart schwenkbar sind, daß der Behälter 10, wie in Fig. 3 mit dünnen Linien angedeutet, nach unten gekippt werden kann. Ein Behältermantel, wie er in Fig. 1 und 2 dargestellt ist, entfällt gemäß Fig. 3 ; deshalb ist der Abgasstutzen 26 oder eine ihm entsprechende Öffnung im Behälterdeckel 28 ausgebildet.

Die Ausführungsform gemäß Fig. 4 ist mit der in Fig. 3 dargestellten hinsichtlich der Gestaltung des Behälters 10 und der in ihm angeordneten Bauteile weitgehend vergleichbar, wobei allerdings der Abweisschirm 56 erheblich weniger ausgeprägt ist. Anstelle eines Behälterdeckels ist ein ortsfestes Filtergehäuse 74 vorgesehen, an das der Behälter 10 von unten her, beispielsweise mit einem Hubwagen 20 der in Fig. 1 und 2 dargestellten Art, abdichtend angedrückt wird. Das Filtergehäuse 74 enthält mehrere Schlauchfilter 76 üblicher Bauart und weist einen weiter oben angeordneten Abgasstutzen 78 auf. Ferner ist im Filtergehäuse 74 ein zentrales Rohr 80 befestigt, an dem das Tauchrohr 40 aufgehängt ist, wobei zwischen beiden eine schlauchförmige Dichtung 82 angeordnet ist.

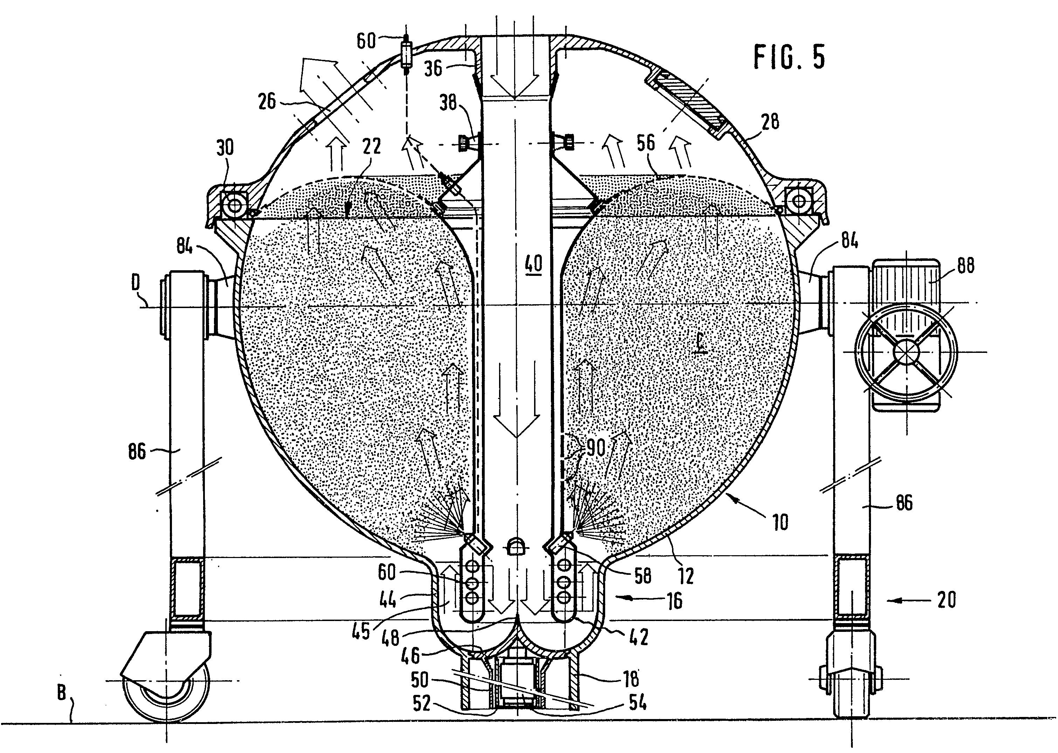

Bei der in Fig. 5 dargestellten Ausführungsform hat der Behälter 10 zusammen mit dem Behälterdeckel 28 die Form einer Kugel und kann somit einem verhältnismäßig großen Innendruck standhalten, wie er bei einer Verpuffung von Lösungsmitteln auftreten kann. Vom Behälter 10 ragen, einander diametral gegenüber, zwei Achszapfen 84 weg, deren gemeinsame Achse eine waagerechte Schwenkachse D bildet. Die Achszapfen 84 sind in Ständern 86 gelagert und diese sind an einem Hubwagen 20 befestigt, der im übrigen dem in Fig. 1 und 2 dargestellten entspricht. An dem einen Ständer 86 ist ein von Hand antreibbares Getriebe 88 angeordnet, mit dem sich der Behälter 10 samt Behälterdeckel 28 um die waagerechte Schwenkachse D schwenken läßt, wenn — beispielsweise bei einem Produktwechsel — eine gründliche Reinigung erforderlich ist.

Allen dargestellten Ausführungsformen ist gemeinsam, daß im Betrieb ein Gas, beispielsweise erwärmte trockene Luft, von oben in das Tauchrohr 40 eingeleitet wird, dieses mit einer Geschwindigkeit von beispielsweise 20 bis 40 m/s nach unten durchströmt, in der Schüssel 16 um etwa 180° umgelenkt und im Ringraum 45 nach oben geführt wird. Die Strömungsgeschwindigkeit des Gases im engsten Bereich des Ringraumes 45 beträgt mindestens 20 m/s, vorzugsweise zwischen 30 und 60 m/s. Dementsprechend ist der engste Querschnitt des Ringraumes 45 vorzugsweise kleiner als der Innenquerschnitt des Tauchrohrs 40. Dabei wird das Gas, wenn leitschaufelartige Vorsprünge 64 der in Fig. 3 dargestellten Art vorgesehen sind, je nach deren Gestaltung und Anordnung drallfrei geführt oder mit einem Drall versehen.

Das Gas strömt dann in einem verhältnismäßig engen Bereich rings um das Tauchrohr 40 bzw. dessen Ummantelung nach oben und fluidisiert zumindest in diesem Bereich das im Behälter 10 enthaltene Gut C. Der Abweisschirm 56 wird je nach seiner Gestaltung von dem gesamten Gas umströmt (Fig. 1 und 4) oder von dem größeren Teil des Gases umströmt, von einem kleineren Teil dagegen durchströmt (Fig. 2) oder von dem gesamten Gas durchströmt (Fig. 3 und 5). Das Gas verläßt den Behälter 10 durch dessen Gasauslaß 22, während das strömende Gut C vom Abweisschirm 56 nach außen abgelenkt wird und dann entlang der Wand des Behälters 10 nach unten fließt, wo es in der Nähe des oberen Randes der Schüssel 16 wieder von dem Gasstrom erfaßt und in einem zentralen schlauchartigen Strömungsgebilde nach oben mitgerissen wird.

Wegen der Konzentration der Gasströmung im Bereich rings um das Tauchrohr 40 bzw. dessen Ummantelung wird das Gut C schon bei einem verhältnismäßig geringen Gas- bzw. Luftdurchsatz fluidisiert. Der für die gewünschte Behandlung des Gutes C erforderliche Aufwand an Bewegungs- und Wärmeenergie ist deshalb gering.

Nach der Behandlung des Gutes C wird der Behälter 10 entleert, sei es dadurch, daß der mittlere Bodenbereich 46 bei den in Fig. 1, 4 und 5 dargestellten Ausführungsformen in der aus Fig. 4a ersichtlichen Weise angehoben wird, so daß das Gut C von selbst nach unten rieselt, sei es daß der in Fig. 2 und 3 dargestellte Entleerungsstutzen 66 geöffnet und das Gut C pneumatisch aus dem Behälter 10 herausgefördert wird. Bei der Ausführungsform gemäß Fig. 5 besteht auch die Möglichkeit, das Gut C bei geöffnetem Behälterdeckel 28 aus dem Behälter 10 herauszukippen.

**Patentansprüche**

1. Fließbettapparatur zum Mischen, Trocknen, Granulieren, Pelletieren, Lackieren und/oder Dragieren pulvrigen oder körnigen Gutes mit
— einem Behälter (10), der in bezug auf eine zumindest annähernd senkrechte Behälterachse (A) zumindest annähernd rotationssymmetrisch ist und ein Unterteil (12) mit nach unten abnehmendem Durchmesser hat,
— einem Tauchrohr (40), das von oben her axial in den Behälter (10) hineinragt und an eine Quelle für ein Gas anschließbar ist, mit dem sich das Gut (C) im Behälter (10) bewegen, insbesondere fluidisieren läßt,
— einer Schüssel (16), die unterhalb des Tauchrohrs (40) angeordnet, in bezug auf die Behälterachse (A) zumindest annähernd rotationssymmetrisch gestaltet ist und das durch das Tauchrohr (40) eintretende Gas nach oben umlenkt
— und einem Gasauslaß (22),
dadurch gekennzeichnet,
— daß das Unterteil (12) des Behälters (10) in eine im wesentlichen zylindrische Wand (44) der Schüssel (16) einmündet,
— und das Tauchrohr (40) in die Schüssel (16) derart eintaucht, daß zwischen Tauchrohr (40) und zylindrischer Wand (44) der Schüssel (16) ein enger Ringraum (45) gebildet ist.

2. Fließbettapparatur nach Anspruch 1, dadurch gekennzeichnet, daß der Ringraum (45) radial nach innen durch einen unteren Randwulst (42) des Tauchrohrs (40) begrenzt ist.

3. Fließbettapparatur nach Anspruch 2, dadurch gekennzeichnet, daß der Randwulst (42) von einem rings um das Tauchrohr (40) angeordneten, aufblähbaren Schlauch gebildet ist.

4. Fließbettapparatur nach einem der Ansprüche 1 bis 3, dadurch gekennzeichnet, daß die von der Eintauchtiefe des Tauchrohrs (40) in die Schüssel (16) bestimmte Höhe des Ringraumes (45) ungefähr so groß oder größer als der Innendurchmesser des Tauchrohrs (40) in dessen unterem Endabschnitt ist.

5. Fließbettapparatur nach einem der Ansprüche 1 bis 4, dadurch gekennzeichnet, daß der engste Querschnitt des Ringraumes (45) ungefähr so groß oder kleiner als der Innenquerschnitt des Tauchrohrs (40) in dessen unterem Endabschnitt ist.

6. Fließbettapparatur nach einem der Ansprüche 1 bis 5, bei der in einem Abstand oberhalb der Schüssel (16) rings um das Tauchrohr (40) ein zumindest annähernd rotationssymmetrischer Abweisschirm (56) angeordnet ist, der vom Gas nach oben mitgenommenes Gut (C) nach außen umlenkt, dadurch gekennzeichnet, daß der Abweisschirm (56) siebartig gestaltet ist.

7. Fließbettapparatur nach einem der Ansprüche 1 bis 6, bei der die Schüssel (16) einen nach oben vorspringenden mittleren Bodenbereich (46) aufweist, dadurch gekennzeichnet, daß der mittlere Bodenbereich (46) der Schüssel (16) einen höhenverstellbaren Verschluß einer Entleerungsöffnung bildet.

8. Fließbettapparatur nach einem der Ansprüche 1 bis 7, dadurch gekennzeichnet, daß die Schüssel (16) unterhalb ihrer zylindrischen Wand (44) einen tangential wegragenden Entleerungsstutzen (66) aufweist.

9. Fließbettapparatur nach einem der Ansprüche 1 bis 8, dadurch gekennzeichnet, daß die Schüssel (16) an ihrer zylindrischen Wand (44) nach innen ragende leitschaufelartige Vorsprünge (64) aufweist, zwischen denen das Tauchrohr (40) zentriert und der Gasstrom geführt ist.

10. Fließbettapparatur nach einem der Ansprüche 1 bis 9 mit einer Sprüheinrichtung zum Befeuchten oder Beschichten des Gutes oder zum Einleiten von Stoffen, die das Gut erst bilden, dadurch gekennzeichnet, daß die Sprüheinrichtung mehrere Düsen (58) aufweist, die dicht oberhalb des engen Ringraumes (45) der Schüssel (16) rings um das Tauchrohr (40) angeordnet sind.

## Claims

1. Fluidized bed apparatus for mixing, drying, granulating, pelletizing, lacquering and/or coating pulverulent or granular material comprising
— a container (10) which with respect to an at least approximately perpendicular container axis (A) is at least approximately rotational symmetrical and has a lower portion (12) with downwardly decreasing diameter,
— an immersion tube (40) which projects from above axially into the container (10) and is connectable to a source for a gas with which the material (C) in the container (10) can be agitated, in particular fluidized,
— a dish (16) which is disposed beneath the immersion tube (40), made at least approximately rotational symmetrical with respect to the container axis (A) and deflects upwardly the gas entering through the immersion tube (40)
— and a gas outlet (22),
characterized in
— that the lower portion (12) of the container (10) opens into a substantially cylindrical wall (44) of the dish (16),
— and the immersion tube (40) dips into the dish (16) in such a manner that between the immersion tube (40) and cylindrical wall (44) of the dish (16) a narrow annular space (45) is formed.

2. Fluidized bed apparatus according to claim 1, characterized in that the annular space (45) is bordered radially inwardly by a lower edge bead (42) of the immersion tube (40).

3. Fluidized bed apparatus according to claim 2, characterized in that the edge bead (42) is formed by an inflatable hose disposed round the immersion tube (40).

4. Fluidized bed apparatus according to any one of claims 1 to 3, characterized in that the height of the annular space (45) defined by the immersion depth of the immersion tube (40) in the dish (16) is approximately as great or greater than the internal diameter of the immersion tube (40) in its lower end portion.

5. Fluidized bed apparatus according to any one of claims 1 to 4, characterized in that the narrowest cross-section of the annular space (45) is approximately as large or smaller than the internal cross-section of the immersion tube (40) in its lower end portion.

6. Fluidized bed apparatus according to any one of claims 1 to 5 in which spaced above the dish (16) round the immersion tube (40) an at least approximately rotational symmetrical deflection screen (56) is disposed which deflects outwardly material (C) entrained upwardly by the gas, characterized in that the deflection screen (56) is made sieve-like.

7. Fluidized bed apparatus according to any one of claims 1 to 6, in which the dish (16) comprises an upwardly projecting centre bottom region (46), characterized in that the centre bottom region (46) of the dish (16) forms a vertically adjustable closure means of a discharge opening.

8. Fluidized bed apparatus according to any one of claims 1 to 7, characterized in that the dish (16) comprises beneath a cylindrical wall (44) a tangentially extending discharge member (66).

9. Fluidized bed apparatus according to any one of claims 1 to 8, characterized in that the dish (16) comprises at its cylindrical wall (44) inwardly projecting guide-vane-like projections (64) between which the immersion tube (40) is centered and the gas flow is led.

10. Fluidized bed apparatus according to any one of claims 1 to 9 comprising a spraying means for moistening or coating the material or introducing substances which form the material, characterized in that the spraying means comprises several nozzles (58) which are disposed closely above the narrow annular space (45) of the dish (16) around the immersion tube (40).

**Revendications**

1. Dispositif à lit fluidisé pour mélanger, sécher, granuler, agglomérer, peindre et/ou dragéifier une marchandise pulvérulente ou granuleuse, comportant
— un récipient (10) qui présente au moins approximativement une symétrie de rotation par rapport à un axe de récipient (A) au moins approximativement vertical et qui présente une partie inférieure (12) dont le diamètre va en diminuant vers le bas,
— un tube plongeur (40) qui pénètre, d'en haut, axialement dans le récipient (10) et peut se raccorder à une source de gaz avec lequel on peut placer la marchandise (C) dans le récipient (10), en particulier la fluidiser,
— une cuve (16) qui est disposée sous le tube plongeur (40), qui présente au moins approximativement une symétrie de rotation par rapport à l'axe (A) du récipient et qui dévie vers le haut le gaz qui pénètre à travers le tube plongeur (40),
— et une sortie du gaz (22),
caractérisé en ce que
— la partie inférieure (12) du récipient (10) débouche dans une paroi essentiellement cylindrique (44) de la cuve (16),
— et en ce que le tube plongeur (40) plonge dans la cuve (16) de façon telle qu'entre le tube plongeur (40) et la paroi cylindrique (44) de la cuve (16) se forme un étroit espace annulaire (45).

2. Dispositif à lit fluidisé selon la revendication 1, caractérisé en ce que l'espace annulaire (45) est limité radialement vers l'intérieur par un bourrelet inférieur de bordure (42) du tube plongeur (40).

3. Dispositif à lit fluidisé selon la revendication 2, caractérisé en ce que le bourrelet de bordure (42) est formé d'un tube souple disposé autour du tube plongeur (40) et gonflable.

4. Dispositif à lit fluidisé selon l'une des revendications 1 à 3, caractérisé en ce que la hauteur de l'espace annulaire (45) déterminée dans la cuve (16) par la profondeur de plongée du tube plongeur (40) est à peu près aussi grande ou plus grande que le diamètre intérieur du tube plongeur (40) dans son tronçon d'extrémité inférieure.

5. Dispositif à lit fluidisé selon l'une des revendications 1 à 4, caractérisé en ce que la section la plus étroite de l'espace annulaire (45) est à peu près aussi grande ou plus petite que les sections intérieures du tube plongeur (40) dans son tronçon d'extrémité inférieure.

6. Dispositif à lit fluidisé selon l'une des revendications 1 à 5, dans lequel est disposé, à une certaine distance au-dessus de la cuve (16) et tout autour du tube plongeur (40) un déflecteur (56) au moins approximativement en symétrie de rotation qui dévie vers l'extérieur la marchandise (C) entraînée par les gaz vers le haut, caractérisé en ce que le déflecteur (56) a la structure d'un tamis.

7. Dispositif à lit fluidisé selon l'une des revendications 1 à 6, dans lequel la cuve (16) présente une zone médiane de fond (46) en saillie vers le haut, caractérisé en ce que la zone médiane de fond (46) de la cuve (16) forme une fermeture, réglable en hauteur, pour un orifice de vidage.

8. Dispositif à lit fluidisé selon l'une des revendications 1 à 7, caractérisé en ce que la cuve (16) présente en dessous de la paroi cylindrique (44) une tubulure de vidage (66) qui s'écarte tangentiellement.

9. Dispositif à lit fluidisé selon l'une des revendications 1 à 8, caractérisé en ce que la cuve (16) présente, à sa paroi cylindrique (44), des saillies (64) du type aubes directrices dirigées vers l'intérieur, entre lesquelles le tube plongeur (40) est centré, et le courant gazeux est guidé.

10. Dispositif à lit fluidisé selon l'une des revendications 1 à 9, comportant une installation de pulvérisation pour humidifier ou revêtir la marchandise ou pour introduire des matériaux qui constituent au départ la marchandise, caractérisé en ce que l'installation de pulvérisation présente plusieurs buses (58) disposées juste au-dessus de l'étroit espace annulaire (45) de la cuve (16) et tout autour du tube plongeur (40).

FIG. 1

FIG. 2

FIG. 3

FIG. 4

FIG. 4 a

FIG. 5